(19) Europäisches Patentamt
European Patent Office
Office européen des brevets

(11) EP 1 180 396 A1

(12) **DEMANDE DE BREVET EUROPEEN**

(43) Date de publication:
**20.02.2002 Bulletin 2002/08**

(51) Int Cl.[7]: **B01J 20/32**, B01J 31/02

(21) Numéro de dépôt: **01402128.1**

(22) Date de dépôt: **07.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **17.08.2000 FR 0010695**

(71) Demandeur: **INSTITUT FRANCAIS DU PETROLE**
**92852 Rueil-Malmaison Cedex (FR)**

(72) Inventeurs:
- **Forestiere, Alain**
**69390 Vernaison (FR)**
- **Mutin, Hubert P.**
**34830 Clapiers (FR)**
- **Vioux, André**
**37980 Montferrier sur Lez (FR)**
- **Guerrero, Gilles**
**34500 Beziers (FR)**

(74) Mandataire: **Andréeff, François et al**
**Département Brevets, Institut Français du Petrole, 1 & 4 avenue de Bois-Préau**
**92852 Rueil Malmaison (FR)**

(54) **Matériaux comportant des groupement organiques contenant du phosphore lié par l'intermédiaire d'atomes d'oxygenes à un oxyde minéral**

(57) Matériaux fonctionnalisés essentiellement amorphes, comportant une couche essentiellement monomoléculaire de groupements organiques liés à un oxyde minéral d'un élément M par l'intermédiaire d'atome d'oxygènes dudit oxyde à un atome de phosphore lui même de préférence lié à une chaîne hydrocarbonée substituée à distance de l'atome de phosphore par un groupe contenant du soufre ou par un groupe réactif transformable en un groupe contenant du soufre, lesdits matériaux étant essentiellement exempt de phases phosphate, phosphonate, phosphinate, dudit élément M et sulfate dudit élément M lorsque les matériaux comportent un groupe contenant du soufre. Procédé de préparation de matériaux fonctionnalisés par mise en contact d'une suspension dans un liquide d'au moins un oxyde minéral d'au moins un élément M avec une solution dans un solvant d'au moins un composé phosphoré comportant le plus souvent, à distance de l'atome de phosphore, un groupe contenant du soufre relié audit atome de phosphore par une chaîne hydrocarbonée.

Figure 1

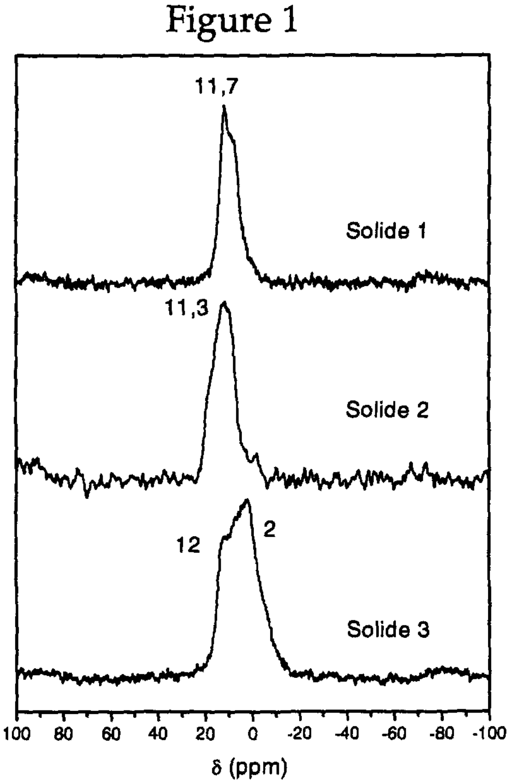


EP 1 180 396 A1

## Description

La présente invention concerne des matériaux comportant des groupement organiques contenant du phosphore lié par l'intermédiaire d'une liaison covalente à un oxyde minéral et le plus souvent un autre groupe fonctionnel le plus souvent terminal tel que par exemple un groupe fonctionnel contenant du soufre, ainsi que leur préparation par greffage. Elle concerne également les diverses applications de ces matériaux notamment en catalyse en particulier quand le groupement organique contenant du soufre est un groupe terminal sulfonique ou un dérivé sulfonique, également comme adsorbant ou complexant en particulier quand le groupement organique contenant du soufre est un groupe terminal thiol ou un dérivé du groupe thiol tel que par exemple un sulfure ou un polysulfure.

Ces matériaux offrent une alternative au matériaux résultant du greffage de groupements organosiliciés sur des oxydes minéraux ou des polysiloxanes réticulés, pour l'hétérogènéisation par greffage de fonctions organiques. L'utilisation de groupements phosphorés et organophosphorés: présente différents avantages par rapport à l'utilisation de groupement organosiliciés. La facilité de formation et la stabilité des liaisons P-O-métal est plus importante que celle des liaisons Si-O-métal ce qui permet l'utilisation de matrices d'oxydes minéraux autres que la silice (par exemple l'alumine, le dioxyde de zirconium ou le dioxyde de titane) offrant une meilleure stabilité chimique. L'absence de réactions d'homocondensation POH/POH dans les conditions usuelles de préparation assure une meilleure homogénéité c'est-à-dire la formation des seules liaisons P-O-métal à l'exclusion des liaisons P-O-P.

Des matériaux, utilisés en particulier comme adsorbant, obtenus par réaction entre les sites réactifs de particules d'oxydes/hydroxydes sur un composé phosphoré contenant un ou plusieurs groupes organiques acides sont par exemple décrits dans les brevets US 4,788,176, US 4,994,429. Selon l'enseignement de ces brevets ces composés sont obtenus par greffage des oxydes/hydroxydes à l'aide de composés acides tels que des dérivés des acides phosphoniques ou phosphiniques. Le greffage débute à un pH très acide par exemple égal à 1,8 ce qui entraîne une formation d'une phase phosphonate d'aluminium dans le cas où les particules sont des particules d'alumine comme cela sera montré dans un exemple comparatif donné ci-après par analyse du spectre de résonance magnétique nucléaire du phosphore 31 et par comparaison de la surface spécifique de l'alumine avant et après greffage. Par ailleurs l'utilisation de composés acides et d'une forte acidité pour effectuer le greffage peut conduire à la formation de multicouches ou phase phosphonate d'aluminium comme cela est par exemple mentionné dans l'exemple 1 du brevet US 4,786,628 ce qui est défavorable dans les utilisations de ces solides notamment en catalyse. L'enseignement de ce brevet US 4,786,628 n'est d'ailleurs pas clair puisque selon la figure 7 illustrant l'invention il est mentionné que l'on doit employer une solution d'acide phosphonique et/ou phosphinique d'au moins 0, 1 molaire en contradiction avec l'enseignement de l'exemple 1, dans l'exemple 2 le pH initial est 1,8 comme cela est visible sur la figure 6 et de plus selon l'exemple 4, l'alumine est traitée avec une solution 0,3 molaire d'acide n-heptadecylphosphonique. Le brevet US 4,994,429 donne un exemple d'un oxyde d'aluminium greffé par un groupe fonctionnel contenant du soufre sous forme d'un groupe sulfonique qui est introduit par mise en réaction du solide minéral, greffé à l'aide de l'acide phénylphosphonique, avec de l'acide sulfurique fumant c'est-à-dire contenant de l'anhydride sulfurique, donc un milieu très acide avec un risque non négligeable d'attaque de l'alumine. Par ailleurs aucun des brevets cités ci-devant n'enseigne de méthode de préparation d'oxyde fonctionnalisés comprenant un groupe contenant du soufre relié à l'atome de phosphore par une chaîne aliphatique.

On a maintenant découvert un solide fonctionnalisé et une méthode de préparation par greffage de ce solide permettant de s'affranchir des inconvénients de la méthode de préparation de l'art antérieur et d'introduire la fonctionnalité souhaitée soit avant ou après l'étape de greffage, mais de préférence avant.

Dans sa définition la plus large, les solides fonctionnalisés objets de la présente invention peuvent se définir comme des matériaux fonctionnalisés comportant des groupements organiques contenant du phosphore liés par l'intermédiaire d'atomes d'oxygènes à un oxyde minéral d'au moins un élément M, lesdits matériaux étant caractérisés en ce qu'ils sont essentiellement amorphes, en ce qu'ils comportent une couche essentiellement monomoléculaire de groupements organiques liés audit oxyde minéral par l'intermédiaire d'atome d'oxygènes dudit oxyde à l'atome de phosphore et en ce que lesdits matériaux sont essentiellement exempts de phase phosphate, phosphonate ou phosphinate dudit élément M. Au sens de la présente description les termes essentiellement exempts de phase phosphate, phosphonate ou phosphinate signifie que le nombre d'atomes de phosphore présents dans de telle phase du solide fonctionnalisé est inférieur à environ 10 % et souvent inférieur à environ 3 % du nombre total d'atomes de phosphore présents dans le solide Les matériaux selon la présente invention comprennent de préférence un groupe contenant du soufre ou un groupe réactif transformable en un groupe contenant du soufre lesdits matériaux étant essentiellement exempts de phase sulfate dudit élément M. Ce groupe contenant du soufre est situé à distance de l'atome de phosphore et est relié au phosphore par une chaîne hydrocarbonée. Le plus souvent le phosphore et le soufre sont chacun situés à une extrémité de la chaîne hydrocarbonée.

Selon une forme particulière les matériaux de la présente invention ont un rapport élément M sur phosphore qui est d'environ 0,5 : 1 à environ 350 : 1 et souvent d'environ 10 : 1 à environ 250 : 1 et le plus souvent d'environ 15 : 1 à environ 200 : 1. Le rapport soufre sur phosphore est habituellement d'environ 0,05 : 1 à environ 10 : 1, souvent

d'environ 0,1 : 1 à environ 5 : 1 et le plus souvent d'environ 0,4 : 1 à environ 2 : 1.

Le matériau de la présente invention est habituellement un matériau dans lequel M désigne un élément des groupes IB, IIB, IIIB, IVB, VB, VIB, VIIB, VIII, IIIA, des lanthanides ou des actinides de la classification périodique des éléments (Handbook of Chemistry and Physics 45$^{th}$ edition 1964-1965) et souvent M désigne un élément choisi dans le groupe comprenant le titane, le zirconium, le fer, l'aluminium et de préférence parmi les éléments du groupe comprenant le titane, le zirconium et l'aluminium.

Le groupement organique contenant du soufre est de préférence choisi parmi les groupes thiols et leurs dérivés, les groupes acides sulfoniques et leurs dérivés. Le groupement organique contenant du soufre est habituellement choisi dans le groupe formé par le groupement thiol de formule -SH, le groupement sulfure de formule -S-R1 dans laquelle R1 est un reste hydrocarboné et le groupement polysulfure de formule $-(S)_y-R1$ dans laquelle y est un nombre supérieur ou égal à 2 et R1 est un reste hydrocarboné, ou dans le groupe formé par le groupement acide sulfonique de formule $-SO_3H$, les groupements sulfonates organiques de formules $-SO_3R1$ dans laquelle R1 est un reste hydrocarboné et les goupements sulfonates minéraux de formules $-SO_3(M')_{1/t}$ dans laquelle M' est un élément de valence t du tableau périodique des éléments et de préférence un métal alcalin.

Dans les formules ci-devant R1 désigne un groupe hydrocarboné ayant le plus souvent de 1 à 24 atomes de carbone et par exemple un reste alkyle, aryle ou alkyl-aryle,

Les groupements phosphorés sont habituellement des groupements de type phosphates, phosphonates ou phosphinates représentés ci-après

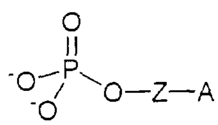
Phosphate

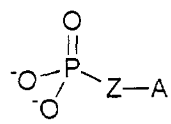
Phosphonate

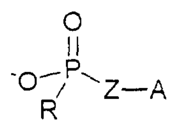
Phosphinate

**Exemples de groupements phosphorés**

Dans cette représentation A désigne le groupement organique contenant de préférence du soufre ou un groupe réactif transformable en un groupe contenant du soufre et Z est un groupe hydrocarboné défini ci-après en liaison avec le procédé de préparation des matériaux selon la présente invention.

L'invention concerne également un procédé de préparation d'un matériau tel que défini ci-devant dans lequel on met en contact une suspension dans un liquide d'au moins un oxyde minéral d'un élément M avec au moins une solution dans un solvant d'au moins un composé phosphoré de formule I

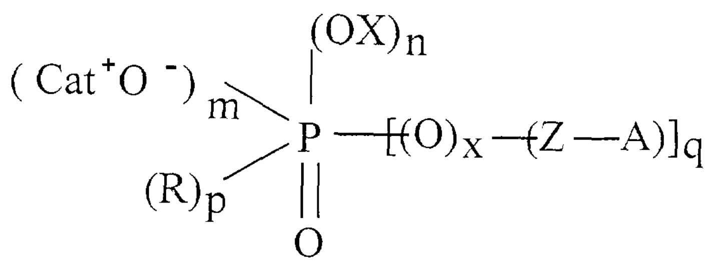
I

dans laquelle la somme m+n+p+q est égale à 3, m =0, 1 ou 2, q=0, 1 ou 2, x=0 ou 1, p=0, 1 ou 2, R est un groupe hydrocarboné, X est un atome d'hydrogène, un groupe hydrocarboné ou un groupe de formule $SiR''_3$ dans laquelle R'' est un groupe hydrocarboné, Z est un groupe hydrocarboné comportant éventuellement des hétéroatomes, $Cat^+$ est un cation monovalent et A est un groupe contenant du soufre ou un groupe réactif transformable en un groupe contenant du soufre, ladite mise en contact étant effectuée dans des conditions de pression, de température et d'acidité du milieu telles qu'il ne se forme pratiquement pas de phase phosphate, phosphonate, phosphinate et sulfate dudit élément M. Habituellement Z est un groupe hydrocarboné contenant de 1 à 24 atomes de carbone, de préférence de 2 à 12 atomes de carbone et le plus souvent Z représente une chaîne hydrocarbonée aromatique ou une chaîne hydrocarbonée aliphatique et dans ce cas de préférence une chaîne hydrocarbonée aliphatique saturée reliant le groupement contenant du phosphore au groupement contenant du soufre.

Le plus souvent le composé phosphoré employé est un composé de formule I dans laquelle $Cat^+$ est un proton $H^+$ ou de préférence un cation alcalin, R est un groupe alcoyle ayant de 1 à 18 atomes de carbone ou un groupe aryle ayant de 6 à 18 atomes de carbone ou un groupe alkyl-aryle ayant de 7 à 24 atomes de carbone, X est choisi dans le groupe formé par les groupes alcoyles ayant de 1 à 18 atomes de carbone, les groupes aryles ayant de 6 à 18 atomes de carbone, les groupes alkyl-aryles ayant de 7 à 24 atomes de carbone et les groupes de formule $SiR''_3$ dans laquelle R" est un groupe hydrocarboné, Z est un groupe alkylique bivalent saturé ou non ayant de 1 à 18 atomes de carbone ou un groupe arylique bivalent ayant de 6 à 18 atomes de carbone ou une groupe bivalent alkyl-arylique ou aryl-alkylique ayant de 7 à 24 atomes de carbone et A est un groupe contenant du soufre choisi parmi les groupes thiols et leurs dérivés, les groupes acides sulfoniques et leurs dérivés. Ce groupe A est de préférence un groupe thiol de formule -SH ou un groupe sulfonique de formule $-SO_3^-Cat'^+$ dans lequel $Cat'^+$ représente un proton $H^+$ ou un cation monovalent tel que par exemple un cation d'un métal alcalin. Parmi ces composés phosphorés de formule I on utilisera avantageusement ceux dans lesquels Z est une groupe alkylique bivalent saturé ayant de 1 à 6 atomes de carbone et de préférence un groupe polyméthylène et souvent un groupe polyméthylène ayant de 1 à 4 atomes de carbone. Le groupe A peut également être un groupe réactif transformable en un groupe contenant du soufre, le plus souvent un groupe halogéné, tel que par exemple un atome de brome ou un atome de chlore.

Le composé phosphoré de formule I est de préférence un composé dans lequel m=2, q=1 et n=p=zéro, ou un composé de formule I dans laquelle n=2, q=1, m=p=zéro. Dans le cas où m=2 $Cat^+$ est de préférence soit un proton $H^+$ soit un cation alcalin tel que par exemple le sodium ou le potassium suivant l'oxyde minéral de l'élément M employé en fonction en particulier de sa sensibilité à former des phases phosphates, phosphonates ou phosphinates dans les conditions d'acidités de mise en oeuvre de la réaction. Dans le cas où n=2 X est de préférence un groupe alcoyle ayant de 1 à 12 atomes de carbone et souvent de 1 à 8 atomes de carbone.

Le solvant du composé phosphoré de formule I est par exemple de l'eau ou un solvant organique tel que le dimethylsulfoxyde ou le tétrahydrofurane ou le dichlorométhane. Le liquide employé pour mettre l'oxyde minéral de l'élément M en suspension est de préférence le solvant que l'on utilise pour dissoudre le composé de formule I.

Les diverses étapes de préparation des matériaux selon la présente invention sont individuellement des étapes classiques bien connues des hommes du métier et dont une référence sera donnée dans les exemples suivants qui illustre l'invention sans en limiter la portée.

## Exemple 1 (selon l'invention)

Dans un ballon tricol, on dissout 1,049 g ($6{,}64*10^{-3}$ mole) d'acide phénylphosphonique dans un mélange méthanol/eau (750/250 ml). Le pH de la solution mesuré par un pHmètre préalablement standardisé est égal à 3,2. Le pH est ensuite ajusté à 6 par ajout d'une solution aqueuse d'hydroxyde de sodium de normalité 1N. Une suspension de 2 g ($1{,}96*10^{-2}$ mole) d'alumine C Degussa dans 200 ml d'eau permutée est alors ajoutée. Un réfrigérant est ajouté au montage et le mélange réactionnel agité pendant 24 heures à température ambiante. Le solide est ensuite filtré et lavé 5 fois avec 50 ml de méthanol de façon à ôter l'acide phénylphosphonique physisorbé. Le solide est ensuite lavé avec de l'eau permutée, de l'éthanol, de l'acétone et de l'éther et séché pendant 5 heures à 120°C sous $5*10^{-2}$ mbar. L'analyse élémentaire du solide 1 donne les résultats suivant : A1 37,0%, P 2,1%. Soit un rapport molaire A1/P de20,2.

Le spectre de RMN du phosphore 31 du solide 1 (voir figure 1) réalisé sur un appareil Bruker Avance 300 MHz montre un pic large à 11,7 ppm avec un épaulement à 10,5 ppm, correspondant au déplacement chimique attendu pour des groupes phénylphosphonates liés à la surface des particules d'alumine, la surface spécifique de l'alumine utilisée comme support reste inchangée à 90 $m^2/g$.

## Exemple 2 (selon l'invention)

Dans un ballon tricol, on dissout 1,42 g ($6{,}64*10^{-3}$ mole) de diéthylphénylphosphonate dans 40 ml de dichlorométhane sec. Une suspension de 2 g ($1{,}96*10^{-2}$ mole) d'alumine C Degussa (préalablement séchée pendant une nuit à 120°C sous $5*10^{-2}$ mbar) dans 40 ml de dichlorométhane sec est alors ajoutée. Un réfrigérant est ajouté au montage qui est placé sous argon .Le mélange réactionnel est agité pendant 24 heures à 40°C. Le solide est ensuite filtré et lavé 5 fois avec 50 ml de méthanol de façon à ôter le diéthylphénylphosphonate physisorbé. Le solide est ensuite lavé avec du dichlorométhane sec, de l'acétone et de l'éther et séché pendant 5 heures à 120°C sous $5*10^{-2}$ mbar.

L'analyse élémentaire du solide 2 donne les résultats suivant : A1 50,5%, P 1,0% soit un rapport molaire A1/P de 58.

Le spectre de RMN du phosphore 31 du solide 2 (voir figure 1) réalisé sur un appareil Bruker Avance 300 MHz montre un pic large à 11,3 ppm correspondantu déplacement chimique attentdu pour des groupes phénylphosphonates liés à la surface des particules d'alumine. la surface spécifique de l'alumine utilisée comme support reste inchangée à 90 $m^2/g$.

**Exemple 3 (comparatif)**

Dans cet exemple on opère en suivant le mode opératoire décrit dans l'exemple 1 du brevet US 4,788,176. Dans un ballon tricol, on dissout 1,58 g ($1*10^{-2}$ mole) d'acide phénylphosphonique dans 100 ml d'eau permutée (concentration 0,1 M). Cette solution est ajoutée à 10 g ($9,8*10^{-2}$ mole) d'alumine C Degussa (surface spécifique 90 $m^2$/g) (préalablement séchée pendant une nuit à 120°C sous $5*10^{-2}$ mbar). On obtient alors une pâte très dense ; ce mélange réactionnel est agité pendant 24 heures à température ambiante. Le solide est ensuite filtré et lavé à l'eau puis au méthanol de façon à ôter l'acide phénylphosphonique physisorbé et séché pendant 5 heures à 110°C sous $5*10^{-2}$ mbar.
L'analyse élémentaire du solide 3 donne les résultats suivant : A1 : 28,8 %, P : 2,3 % soit un rapport molaire A1/P de 14,4.

Le spectre de RMN du phosphore 31 du solide 3 (voir figure 1) réalisé sur un appareil Bruker Avance 300 MHz montre un pic à +2 ppm correspondant au déplacement chimique attendu pour des groupes phénylphosphonates liés à des atomes d'aluminium dans une phase phénylphosphonate d'aluminium et un épaulement à 12 ppm correspondant u déplacement chimique attendu pour des groupes phénylphosphonates liés à la surface des particules d'alumine.

De plus, le greffage dans les conditions décrites ci-dessus conduit à une augmentation importante de la surface spécifique de l'alumine utilisée comme support, qui passe de 90 $m^2$/g avant greffage à 140 $m^2$/g après greffage.

**Exemple 4 (selon l'invention)**

Dans cet exemple on prépare un solide fonctionnalisé contenant un groupe acide sulfonique.
Dans une première étape on a préparé selon la réaction d'Arbuzov (March, J Advanced Organic Chemistry, 3 ième édition, John Wiley & Sons, New-York, 1985 p. 848) un phosphonate de formule $Br(CH_2)_3PO_3Et_2$ (I').

$$P(OEt)_3 + Br\text{-}(CH_2)_3\text{-}Br \rightarrow Br\text{-}(CH_2)_3\text{-}PO_3Et_2 + EtBr$$

Dans un réacteur sous atmosphère d'azote, on introduit 1 équivalent de triéthylphosphite et 1,5 équivalent de 1,3-dibromopropane. Le réacteur est porté à 140 °C maintenu à cette température, sous agitation pendant 24 h. Après distillation sous une pression de 0,1 millibar (mbar) (10 Pascal) à une température moyenne en fond de colonne de 90 °C on obtient le diéthyl bromopropylphosphonate de formule $Br(CH_2)_3PO_3Et_2$ (I') avec un rendement de 60 % en moles par rapport au triethylphosphite introduit. Ce phosphonate est ensuite fonctionnalisé selon la procédure ci-après utilisant une réaction classique de remplacement de l'atome d'halogène par un groupe sulfonate décrite dans le livre de March, J Advanced Organic Chemistry, 3 ième édition, John Wiley & Sons, New-York, 1985 p. 363 afin d'obtenir le phosphonate de formule $NaSO_3(CH_2)_3PO_3Et_2$ (II). La dernière étape de cette préparation est une hydrolyse des liaisons P-OEt en liaison P-OH qui permet d'obtenir l'acide phosphonique de formule $HSO_3(CH_2)_3PO_3H_2$ (II').

$$Br(CH_2)_3PO_3Et_2 + Na_2SO_3 \rightarrow NaSO_3(CH_2)_3PO_3Et_2 + NaBr$$

$$NaSO_3(CH_2)_3PO_3Et_2 + 2\ HCl \rightarrow HSO_3(CH_2)_3PO_3H_2 + 2\ Et$$

Dans un ballon tricol, on dissout 1,35 g ($6,64*10^{-3}$ mole) d'acide propane-1-phosphono-3-sulfonique de formule $HSO_3(CH_2)_3PO_3H_2$ (II') dans un mélange méthanol/eau (750/250 ml). Le pH de la solution mesuré par un pHmètre préalablement standardisé est. de 3,1 Le pH est ensuite ajusté à 6 par ajout d'une solution aqueuse d'hydroxide de sodium 1N. Une suspension de 2 g ($1,96*10^{-2}$ mole) d'alumine C Degussa (préalablement séchée pendant une nuit à 120°C sous $5*10^{-2}$ mbar) dans 200 ml d'eau permutée est alors ajoutée. Un réfrigérant est ajouté au montage et le mélange réactionnel agité pendant 24 heures à température ambiante. Le solide est ensuite filtré et lavé 5 fois avec 50 ml de méthanol de façon à ôter l'acide propane-1-phosphono-3-sulfonique physisorbé. Le solide est ensuite lavé avec de l'eau permutée, de l'éthanol, de l'acétone et de l'éther et séché pendant 5 heures à 120°C sous $5*10^{-2}$ mbar.
L'analyse élémentaire du solide 4 donne les résultats suivant : A1 : 36,6 %, P : 0,9 % et le soufre S : 0,7 % soit un rapport molaire A1/P de 47 et un rapport molaire S/P de 0,76.

Le spectre de RMN du phosphore 31 du solide 4 (voir figure 2) réalisé sur un appareil Bruker Avance 300 MHz montre un pic large à 23,9 ppm et un épaulement à 19,8 ppm correspondant au déplacement chimique attendu pour des groupes $O_3P(CH_2)_3SO_3H$ liés à la surface des particules d'alumine.

**Exemple 5 (comparatif)**

Dans cet exemple on opère en suivant le mode opératoire décrit dans l'exemple 2 du brevet US 4,994,429. Dans un ballon tricol muni d'un réfrigérant, on place 4 g (39,2 mmoles) d'alumine C Degussa (préalablement séchée pendant une nuit à 120°C sous $5*10^{-2}$ mbar). On rajoute 16 ml d'une solution 0,1M d'acide phénylphosphonique dans l'eau. On porte le mélange à reflux sous agitation pendant une heure à 83°C. On laisse ensuite revenir à température ambiante et décanter. Le produit est séché dans une étuve à vide à 110°C pendant une nuit. Une fois le produit sec, il est placé dans un ballon de 100 ml et on ajoute 8 ml d'acide sulfurique fumant. On ferme le ballon et on le remue de manière à enduire toutes les particules, puis on l'agite pendant deux minutes. Le contenu du ballon est alors placé dans un erlennmeyer avec 1,2 litres (66,7 moles) d'eau désionisée et on laisse reposer le tout. Le produit est ensuite redilué 3 fois avec 1,2 litres d'eau (66,7 moles) à chaque fois. Après avoir laissé décanter le produit, on évacue l'eau et recouvre le produit avec du méthanol. On laisse reposer toute la nuit et ensuite, on évacue le méthanol. On recouvre une nouvelle fois le produit de méthanol et on le laisse s'évaporer. On sèche le produit dans une étuve à vide à 60°C pendant une nuit.
L'analyse élémentaire du solide 5 donne les résultats suivant : A1 : 35,5 %, P : <0,2 %, S : 0,24 %. Il y a donc une perte très importante des groupements phophonates, soit un rapport molaire A1/P de 203,8 et un rapport molaire S/P de 1,16.

**Exemple 6 (selon l'invention)**

Dans un ballon tricol, on dissout 0,68 g ($3,32*10^{-3}$ mole) d'acide propane-1-phosphono-3-sulfonique de formule $HSO_3(CH_2)_3PO_3H_2$ (II') préparé selon la procédure décrite ci-devant dans l'exemple 4 dans un mélange méthanol/eau (750/250 ml). Le pH de la solution mesuré par un pHmètre préalablement standardisé est. égal à 3,1 Le pH est ensuite ajusté à 3,5 par ajout d'une solution aqueuse d'hydroxyde de sodium 1N. Une suspension de 2 g ($2,5*10^{-2}$ mole) de $TiO_2$ P25 Degussa (préalablement séché pendant une nuit à 120°C sous $5*10^{-2}$ mbar) dans 200 ml d'eau permutée est alors ajoutée. Un réfrigérant est ajouté au montage et le mélange réactionnel agité pendant 72 heures à température ambiante. Le solide est ensuite filtré et lavé 5 fois avec 50 ml de méthanol de façon à ôter l'acide propane-1-phosphono-3-sulfonique physisorbé. Le solide est ensuite lavé avec de l'eau permutée, de l'éthanol, de l'acétone et de l'éther et séché pendant 5 heures à 120°C sous $5*10^{-2}$ mbar.
L'analyse élémentaire du solide 6 donne les résultats suivant : Ti : 55,5%, P : 0,4%, S : 0,5% soit un rapport molaire_Ti/P de 90 et un rapport molaire S/P de 0,8.
Le spectre de RMN du phosphore 31 du solide 6 (voir figure 3) réalisé sur un appareil Bruker Avance 300 MHz montre un pic large à 24,9 ppm et un épaulement à 33,5 ppm correspondant au déplacement chimique attendu pour des groupes $O_3P(CH_2)_3SO_3H$ greffés à la surface des particules d'oxyde de titane.

**Exemple 7**

Dans cet exemple on prépare un solide fonctionnalisé contenant un groupe thiol.
Dans une première étape on a préparé selon la procédure décrite ci-devant dans l'exemple 4 le diéthyl bromopropylphosphonate de formule $Br(CH_2)_3PO_3Et_2$ (I'). Dans une deuxième étape, selon la procédure décrite par exemple dans le brevet DE 1,024,964 dans un réacteur contenant 2 équivalents d'hydrogénosulfure de sodium en solution dans du méthanol on introduit goutte à goutte une solution diluée dans du méthanol contenant 1 équivalent de diéthyl bromopropylphosphonate de formule $Br(CH_2)_3PO_3Et_2$ (I') on porte au reflux et on maintien au reflux sous agitation pendant 4 heures. Après évaporation du méthanol on reprend dans du pentane puis on filtre pour récupérer le bromure de sodium NaBr. Après évaporation du pentane et distillation sous vide on récupère le diéthylmercaptopropylphosphonate de formule $HS(CH_2)_3PO_3Et_2$. Dans un ballon tricol, on dissout 0,70 g ($3,32*10^{-3}$ mole) de diéthylmercaptopropylphosphonate dans 40 ml de dichlorométhane sec. Une suspension de 2 g ($2,5*10^{-2}$ mole) de $TiO_2$ P25 Degussa, (préalablement séchés pendant une nuit à 120°C sous $5*10^{-2}$ mbar) dans 40 ml de dichlorométhane sec est alors ajoutée. Un réfrigérant est ajouté au montage qui est placé sous argon .Le mélange réactionnel est agité pendant 24 heures à 40°C. Le solide est ensuite filtré et lavé 5 fois avec 50 ml de méthanol de façon à ôter le diéthylmercaptopropylphosphonate physisorbé. Le solide est ensuite lavé avec du dichlorométhane sec, de l'acétone et de l'éther et séché pendant 5 heures à 120°C sous $5*10^{-2}$ mbar.
L'analyse élémentaire du solide 7 donne les résultats suivant : Ti : 57,2%, P : 0,54 %, S : 0,4% soit un rapport molaire Ti/P de 74 et un rapport molaire S/P de 0,8. Le spectre de RMN du phosphore 31 du solide 7 (voir figure 3) réalisé sur un appareil Bruker Avance 300 MHz montre un pic large à 26,6 ppm correspondant au déplacement chimique attendu pour des groupes $O_3P(CH_2)_3SH$ liés à la surface des particules d'oxyde de titane.

**Revendications**

1. Matériaux fonctionnalisés comportant des groupements organiques du phosphore liés par l'intermédiaire d'atomes d'oxygènes à un oxyde minéral d'au moins un élément M, lesdits matériaux étant **caractérisés en ce qu'**ils sont essentiellement amorphes, **en ce qu'**ils comportent une couche essentiellement monomoléculaire de groupements organiques liés audit oxyde minéral par l'intermédiaire d'atome d'oxygènes dudit oxyde à l'atome de phosphore et **en ce que** lesdits matériaux sont essentiellement exempts de phase phosphate, phosphonate ou phosphinate dudit élément M.

2. Matériaux fonctionnalisés selon la revendication 1 comprenant, à distance de l'atome de phosphore, un groupe contenant du soufre ou un groupe réactif transformable en un groupe contenant du soufre lesdits matériaux étant essentiellement exempts de phase sulfate dudit élément M.

3. Matériaux fonctionnalisés selon la revendication 2 dans lesquels le groupement organique contenant du soufre est choisi dans le groupe formé par les groupes thiols et leur dérivés, les groupes acides sulfoniques et leur dérivés.

4. Matériaux selon la revendication 2 ou 3 dans lesquels le groupement organique contenant du soufre est choisi dans le groupe formé par le groupement thiol de formule -SH, le groupement sulfure de formule -S-R1 dans laquelle R1 est un reste hydrocarboné et le groupement polysulfure de formule $-(S)_y-R1$ dans laquelle y est un nombre supérieur ou égal à 2 et R1 est un reste hydrocarboné

5. Matériaux selon la revendication 2 ou 3 dans lesquels le groupement organique contenant du soufre est choisi dans le groupe formé par le groupement acide sulfonique de formule - $SO_3H$, les groupements sulfonates organiques de formules $-SO_3R1$ dans laquelle R1 est un reste hydrocarboné et les goupements sulfonates minéraux de formules $-SO_3(M')_{1/t}$ dans laquelle M' est un élément de valence t du tableau périodique des éléments et de préférence un métal alcalin.

6. Matériaux selon l'une des revendications 2 à 5 dans lesquels la chaîne hydrocarbonée reliant le groupement contenant du phosphore au groupement contenant du soufre contient de 1 à 24 atomes de carbone, de préférence de 2 à 12 atomes de carbone.

7. Matériaux selon l'une des revendications 2 à 6 dans lesquels la chaîne hydrocarbonée reliant le groupement contenant du phosphore au groupement contenant du soufre est une chaîne aromatique ou une chaîne aliphatique et de préférence une chaîne aliphatique saturée.

8. Matériaux selon l'une des revendications 1 à 7 dans lesquels M désigne un éléments des groupes IB, IIB, IIIB, IVB, VB, VIB, VIIB, VIII, IIIA, IVA, des lanthanides ou des actinides de la classification périodique des éléments.

9. Matériaux selon l'une des revendications 1 à 8 dans lesquels dans lequel M est choisi parmi les éléments du groupe comprenant le titane, le zirconium, le fer, l'aluminium, le silicium et l'étain et de préférence parmi les éléments du groupe comprenant le titane, le zirconium et l'aluminium.

10. Procédé de préparation d'un matériau fonctionnalisé selon l'une des revendications 1 à 9 dans lequel on met en contact une suspension dans un liquide d'au moins un oxyde minéral d'un élément M avec une solution dans un solvant d'au moins un composé phosphoré de formule I

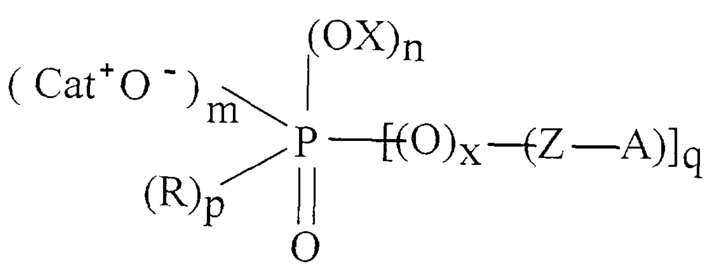

I

dans laquelle la somme m+n+p+q est égale à 3, m =0, 1 ou 2, q =0, 1 ou 2, x=0 ou 1, p=0,1 ou 2, R est un groupe hydrocarboné, X est un atome d'hydrogène, un groupe hydrocarboné ou un groupe de formule $SiR''_3$ dans lequel R" est un groupe hydrocarboné, Z est un groupe hydrocarboné comportant éventuellement des hétéroatomes, $Cat^+$ est un cation monovalent et A est un groupe contenant du soufre ou un groupe réactif transformable en un groupe contenant du soufre, ladite mise en contact étant effectuée dans des conditions de pression, de température et d'acidité du milieu telles qu'il ne se forme pratiquement pas de phase phosphate, phosphonate, phosphinate et sulfate dudit élément M.

**11.** Procédé selon la revendication 10 dans lequel on met en contact une suspension dans un liquide d'au moins un oxyde minéral de l'élément M avec une solution dans un solvant du composé phosphoré de formule I dans laquelle $Cat^+$ est un proton $H^+$, R est un groupe alcoyle ayant de 1 à 18 atomes de carbone ou un groupe aryle ayant de 6 à 18 atomes de carbone ou une groupe alkyl-aryle ayant de 7 à 24 atomes de carbone, X est choisi dans le groupe formé par les groupes alcoyles ayant de 1 à 18 atomes de carbone, les groupes aryles ayant de 6 à 18 atomes de carbone, les groupes alkyl-aryles ayant de 7 à 24 atomes de carbone et les groupes de formule $SiR''_3$ dans lequel R" est un groupe hydrocarboné, Z est un groupe alkylique bivalent saturé ou non ayant de 1 à 18 atomes de carbone ou un groupe arylique bivalent ayant de 6 à 18 atomes de carbone ou une groupe bivalent alkyl-arylique ou aryl-alkylique ayant de 7 à 24 atomes de carbone et A est un groupe contenant du soufre choisi parmi les groupes thiols et leurs dérivés, les groupes acides sulfoniques et leurs dérivés.

**12.** Procédé selon l'une des revendications 10 ou 11 dans laquelle le composé phosphoré de formule I est un composé dans lequel Z est un groupe alkylique bivalent saturé ayant de 1 à 6 atomes de carbone et de préférence un groupe polyméthylène.

**13.** Procédé selon l'une des revendications 10 à 12 dans laquelle le solvant du composé phosphoré est choisi dans le groupe formé par le tétrahydrofurane, le dimethylsulfoxyde, le dichlorométhane et l'eau.

**14.** Procédé selon l'une des revendications 10 à 13 dans lequel le composé phosphoré de formule I employé est un composé dans lequel m=2, q=1 et n=p=zéro.

**15.** Procédé selon l'une des revendications 10 à 13 dans lequel le composé phosphoré de formule I employé est un composé dans lequel n=2, q=1 et m=p=zéro.

Figure 1

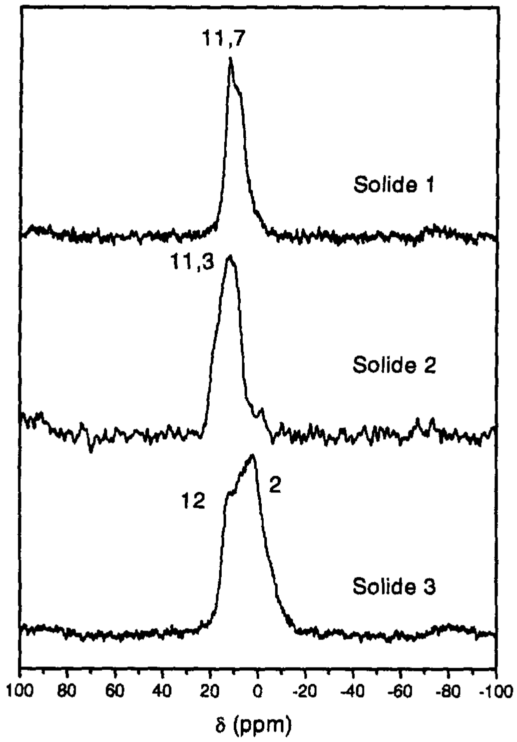


Figure 2

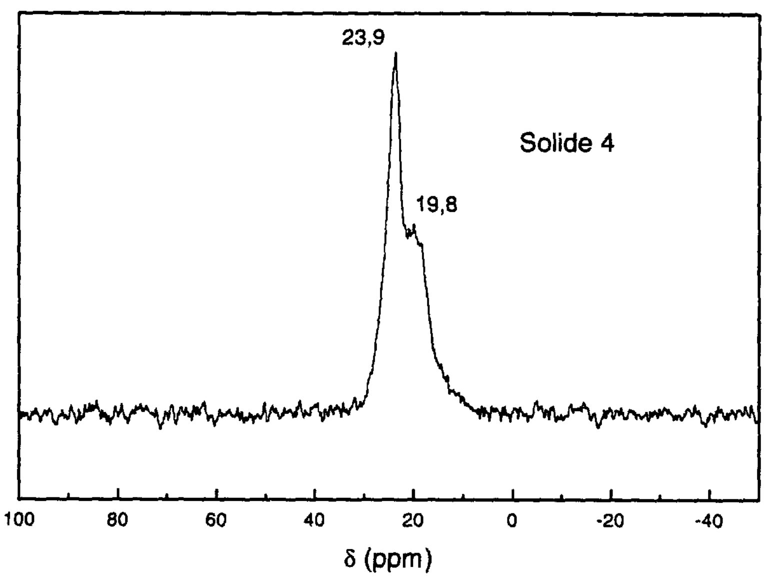


Figure 3

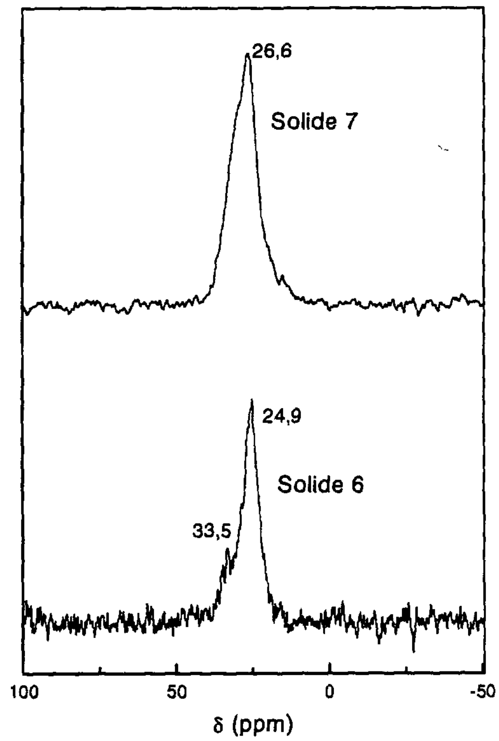

Office européen des brevets

# RAPPORT DE RECHERCHE EUROPEENNE

Numéro de la demande
EP 01 40 2128

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 773 171 A (SOCIÉTÉ CIVILE ASE & BIO) 2 juillet 1999 (1999-07-02)<br>* abrégé *<br>* page 4, ligne 15 - ligne 26 *<br>* page 5, ligne 6 - ligne 11 *<br>* page 9, ligne 8 - ligne 24 *<br>--- | 1-4,6-15 | B01J20/32<br>B01J31/02 |
| D,A | US 4 994 429 A (L.F. WIESERMAN) 19 février 1991 (1991-02-19)<br>* colonne 6, ligne 35 - ligne 56 *<br>* colonne 7, ligne 15 - ligne 68 *<br>--- | 1-3,<br>5-13,15 | |
| A | EP 0 218 506 A (INST NAT SANTE RECH MED) 15 avril 1987 (1987-04-15)<br>* revendications 1-3 *<br>* page 2, ligne 54 - ligne 57 *<br>* page 2, ligne 61 - ligne 62 *<br>--- | 1,8-13,<br>15 | |
| A | US 5 059 258 A (K. WEFERS) 22 octobre 1991 (1991-10-22)<br>* colonne 5, ligne 61 - colonne 6, ligne 39 *<br>* colonne 5, ligne 4 - ligne 22 *<br>--- | 1-3,<br>5-13,15 | DOMAINES TECHNIQUES RECHERCHES (Int.Cl.7)<br>B01J |
| A | EP 0 443 734 A (MINNESOTA MINING AND MANUFACTURING COMPANY) 28 août 1991 (1991-08-28)<br>* page 6, ligne 41 - ligne 53 *<br>--- | | |
| A | US 4 786 628 A (L.F. WIESERMAN) 22 novembre 1988 (1988-11-22)<br>----- | | |

Le présent rapport a été établi pour toutes les revendications

| Lieu de la recherche | Date d'achèvement de la recherche | Examinateur |
|---|---|---|
| LA HAYE | 23 novembre 2001 | Hilgenga, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 01 40 2128

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-11-2001

| Document brevet cité au rapport de recherche | Date de publication | Membre(s) de la famille de brevet(s) | Date de publication |
|---|---|---|---|
| FR 2773171 A | 02-07-1999 | FR 2773171 A1 | 02-07-1999 |
| | | AU 1971999 A | 26-07-1999 |
| | | WO 9935249 A1 | 15-07-1999 |
| US 4994429 A | 19-02-1991 | US 4788176 A | 29-11-1988 |
| | | CA 1307515 A1 | 15-09-1992 |
| | | DE 3785566 D1 | 27-05-1993 |
| | | DE 3785566 T2 | 18-11-1993 |
| | | EP 0273756 A2 | 06-07-1988 |
| | | US 4983566 A | 08-01-1991 |
| | | US 5124289 A | 23-06-1992 |
| | | US 5037795 A | 06-08-1991 |
| | | JP 63248437 A | 14-10-1988 |
| | | US 4871711 A | 03-10-1989 |
| | | US 4904634 A | 27-02-1990 |
| | | US 4957890 A | 18-09-1990 |
| | | US 4962073 A | 09-10-1990 |
| | | US 4929589 A | 29-05-1990 |
| EP 0218506 A | 15-04-1987 | FR 2587358 A1 | 20-03-1987 |
| | | AT 41664 T | 15-04-1989 |
| | | DE 3662524 D1 | 27-04-1989 |
| | | DK 444786 A | 18-03-1987 |
| | | EP 0218506 A1 | 15-04-1987 |
| | | ES 2001427 A6 | 16-05-1988 |
| | | JP 62115286 A | 26-05-1987 |
| US 5059258 A | 22-10-1991 | US 5132181 A | 21-07-1992 |
| EP 443734 A | 28-08-1991 | DE 69100569 D1 | 09-12-1993 |
| | | DE 69100569 T2 | 19-05-1994 |
| | | EP 0443734 A1 | 28-08-1991 |
| US 4786628 A | 22-11-1988 | CA 1301143 A1 | 19-05-1992 |
| | | DE 3785566 D1 | 27-05-1993 |
| | | DE 3785566 T2 | 18-11-1993 |
| | | EP 0273756 A2 | 06-07-1988 |

EPO FORM P0460

Pour tout renseignement concernant cette annexe : voir Journal Officiel de l'Office européen des brevets, No.12/82